# EUROPÄISCHE PATENTSCHRIFT

(11) **EP 0 411 730 B1**
(45) Veröffentlichungstag und Bekanntmachung des Hinweises auf die Patenterteilung: **23.11.1994**
(21) Anmeldenummer: 90250193.1
(22) Anmeldetag: 30.07.1990
(51) Int. Cl.: F16H 1/46, B66D 1/22

(54) **Motorischer Antrieb mit einem mehrstufigen Getriebe für eine Aussenhülse**
Drive system for an exterior sleeve by a multiple-step gearing
Entraînement moteur pour un manchon extérieur par engrenage à plusieurs étages

(30) Priorität: 03.08.1989 DE 3925937
(43) Veröffentlichungstag der Anmeldung: 06.02.1991
(73) Patentinhaber: MANNESMANN Aktiengesellschaft, 40027 Düsseldorf (DE)
(72) Erfinder: Damm, Horst, D-4322 Sprockhoevel 2 (DE)
(74) Vertreter: Meissner, Peter E., Dipl.-Ing.

(56) Entgegenhaltungen:
- DE-A- 2 740 090
- FR-A- 1 131 004
- FR-A- 2 293 638
- GB-A- 2 156 475
- US-A- 4 330 045

## Beschreibung

Die Erfindung betrifft einen motorischen Antrieb mit einem mehr stufigen Getriebe für eine Außenhülse, insbesondere für ein Rad oder eine Trommel, die auf einer an einer Befestigungsplatte angeordneten Traghülse gelagert ist.

Bei einem aus der DE 34 10 866 C 2 bekannten Raduntersetzungsgetriebe sind die Planetengetriebestufen mit Ausnahme der Abtriebsstufe innerhalb der Traghülse angeordnet. Die Abtriebsstufe ist mit ihrem Planetensteg über eine Verzahnung drehfest mit dem außenverzahnten Kopfende der Traghülse verbunden. Ein Deckel verschließt das Getriebe.

Diese Bauweise verhindert eine Verlängerung der Traghülse über die Abtriebsstufe hinaus, um weitere Kräfte und Momente in die Traghülse einzuleiten.

Aus der DE 27 40 090 C 2 ist eine selbsthaltende, manuell betätigte Winsch bekannt, die eine Winschtrommel mit einer längsgeteilten Selbsthaltungsrinne besitzt. Das obere Teil der Selbsthaltungsrinne ist feststehend und mit einem Seilführungsarm versehen. Die Trommel ist auf einer Traghülse gelagert. Die Lager sind von der Befestigungsplatte der Hülse aus gesehen nach dem Eingriff der Antriebszahnräder in etwa der Mitte der Traghülse angeordnet. Innerhalb der Traghülse ist die Antriebsachse angeordnet, die gegenüber der Antriebsseite über ein Getriebe die Trommel antreibt.

Die schlanke Ausbildung der Tragachse und der relativ weite Abstand der Lagerung zur Befestigungsplatte erweist sich als nachteilig, da hierdurch unerwünschte Kippwirkungen begünstigt werden. Die Anordnung der Antriebsachse erschwert eine kompakte Bauweise der Winsch.

Aus der US-A-4 330 045 ist ein motorischer Radantrieb bekannt, bei dem in einer Traghülse der Antriebsmotor und ein Planetengetriebe angordnet sind. Das Abtriebsrad des Planetengetriebes ragt durch die Traghülse und treibt ein auf der Traghülse drehbar gelagertes Rad.
Diese Anordung ist zur Einleitung hoher Kräfte und Momente im Abstand zur Befestigungsebene der Traghülse nicht geeignet.

Der Erfindung liegt die Aufgabe zugrunde, einen gattungsgemäßen motorischen Antrieb mit robuster und kompakter Bauweise zu schaffen, welcher ein hohes Drehmoment liefert, hohe radiale Lasten aufnimmt und zusätzlich an der von der Befestigungsplatte abgewandten Seite einen Angriffspunkt für eine weitere Einleitung von Kräften und Momenten bietet.

Diese Aufgabe wird erfindungsgemäß bei einem motorischen Antrieb mit einem mehrstufigen Getriebe für eine Außenhülse dadurch gelöst, daß das Getriebe überwiegend innerhalb der Traghülse angeordnet ist, daß das Verhältnis eines Abstandes L, der von der Befestigungsplatte parallel zur Getriebemittenachse bis zur von der Befestigungsplatte abgewandten Seite vom Außenlager reicht, zum Innendurchmesser d der Traghülse zwischen 0,8 und 1,5 liegt und daß die Traghülse auf dem von der Befestigungsplatte abgewandten Teil unmittelbar anschließend an das Außenlager zur Durchführung von Abtriebszahnrädern der Abtriebsstufe des Getriebes Aussparungen aufweist und über die Aussparungen bis zu einer Gesamtlänge S von mindestens dem 1,3-fachen des Abstandes L fortgeführt wird.

Erfindungsgemäß erzielt die besondere konstruktive Ausbildung der Traghülse deren Verlängerung über die Abtriebsstufe hinaus und damit die Möglichkeit zur Einleitung weiterer Kräfte und Momente über beliebige konstruktive Elemente. Außerdem weist die als Hülse ausgeführte Tragachse aufgrund ihres günstigen Verhältnisses von Länge zu Durchmesser eine hohe Steifigkeit auf und bietet einen großen Raum für die gegen äußere Einflüsse geschützte Unterbringung des Getriebes und teilweise des Motors. Die bevorzugte Lagerung der Außenhülse auf Kegelrollenlagern in "O"-Anordnung zeichnet sich durch hohe Tragfähigkeit und Kippstabilität aus. Die Verjüngung der Traghülse im Bereich des Traghülsenkopfes bewirkt eine Verkleinerung der Dichtungsfläche zwischen Außenhülse und Traghülse. Eine Stützlagerung in Verbindung mit einer Dichtung an dieser Stelle und die verkleinerte Dichtungsfläche ergeben eine wirksame Abdichtung des Getriebes.

Der Antrieb von selbsthaltenden Segelwinden ist ein wichtiges Einsatzgebiet der Erfindung. Diese spezielle Windenart besitzt eine Trommel mit einer Klemmnut. Ein feststehender Seilführungsarm führt das Seil der Nut zu oder löst das geklemmte Seil wieder. Der erfindungsgemäße Antrieb bietet in Form der durchgeführten stabilen Traghülse den benötigten Befestigungspunkt zur verdrehsicheren Aufnahme des Seilführungsarms. Die auftretenden hohen Seilzugkräfte (z.B. etwa 120 kN bei einem Trommeldurchmesser von 425 mm) werden durch die steife Traghülse des Antriebes sicher in das Bootsdeck geleitet.

Ein weiteres Einsatzgebiet stellt der Radantrieb von Baumaschinen zur Erdbewegung (z.B. Kettenraupen) dar. Der Befestigungsarm der Schaufel oder eines Räumschilds kann direkt auf der durchgeführten Traghülse des Radantriebes drehbar gelagert werden, ohne daß ein zusätzliches Befestigungselement an dem Fahrzeug angebracht werden muß.

An bevorzugten Ausführungsformen wird die Erfindung nachfolgend anhand der Zeichnung erläutert. Es zeigt :
- Fig. 1: eine Schnittskizze des motorischen Antriebes in Ausführung für eine Segelwinde,
- Fig. 2: eine Schnittskizze einer weiteren Ausführungsform des motorischen Antriebes.

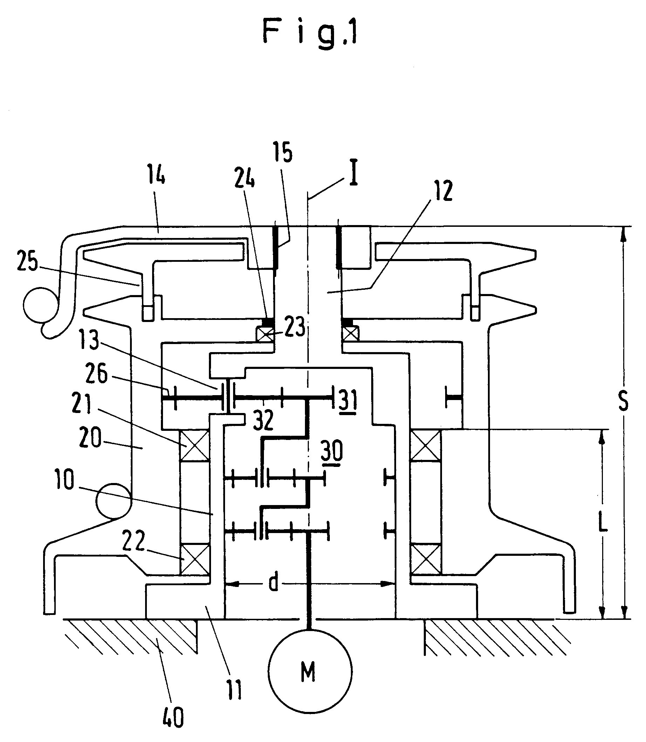

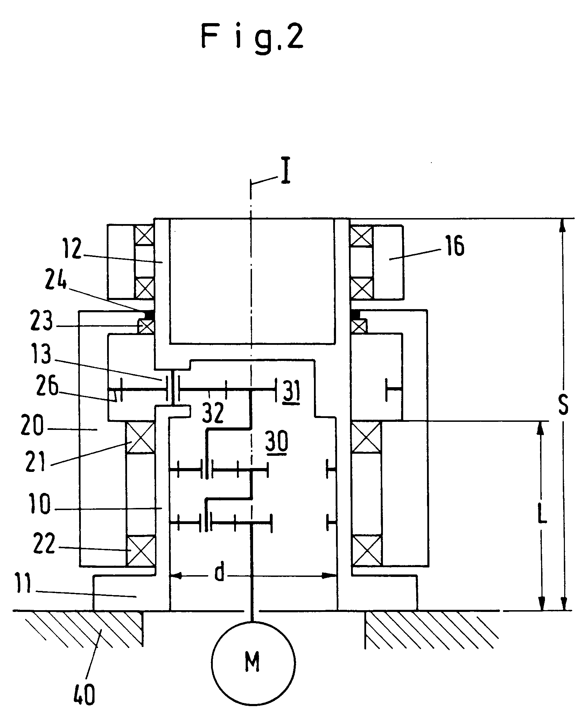

In Fig. 1 und 2 ist eine Traghülse 10 mit einem Innendurchmesser d, die über ihren Traghülsenfuß 11 mit einer Befestigungsplatte 40 verbunden ist, dargestellt. Im Inneren der Traghülse 10 befindet sich ein Getriebe 30. Das Getriebe 30 ist als Planetengetriebe ausgebildet, dessen Sonnenrad der Antriebsstufe von einem Motor M angetrieben wird. Die Abtriebszahnräder 32 der Abtriebsstufe 31 treten durch Aussparungen 13 aus der Traghülse 10 heraus. An der Außenseite der Traghülse 10 ist eine Außenhülse 20 auf Lagern 21 und 22 angeordnet. Die Außenhülse 20 besitzt eine Innenverzahnung 26, die mit den Abtriebszahnrädern 32 der Abtriebsstufe 31 kämmt. Die Außenhülse 20 ist zusätzlich auf einem mit einer Dichtung 24 versehenen Stützlager 23 gelagert. Ein Maß L zeigt den Abstand, der von der Befestigungsplatte 40 parallel zur Getriebemittenachse I bis zur von der Befestigungsplatte 40 abgewandten Seite vom Außenlager 21 reicht. Die Gesamtlänge der Traghülse stellt das Maß S dar.

Fig. 1 zeigt die Außenhülse 20 ausgebildet als Seiltrommel mit einer Klemmnut 25, die sich an dem von der Befestigungsplatte abgewandten Ende befindet. An dem Traghülsenkopf 12 ist über eine Steckverzahnung 15 ein Seilführungsarm 14 befestigt.

Die in Fig. 2 gezeigte Ausführungsform enthält eine auf dem Traghülsenkopf 12 drehbar gelagerte Zusatzhülse 16.

## Patentansprüche

1. Motorischer Antrieb mit einem mehrstufigen Getriebe für eine Außenhülse, insbesondere für ein Rad oder eine Trommel, gekennzeichnet durch folgende Merkmale:
a) die Außenhülse (20) ist auf einer an einer Befestigungsplatte (40) angeordneten Traghülse (10) in Lagern (21, 22) gelagert.
b) das Getriebe (30) ist überwiegend innerhalb der Traghülse (10) angeordnet.
c) das Verhältnis eines Abstandes (L), der von der Befestigungsplatte (40) parallel zur Getriebemittenachse (I) bis zur von der Befestigungsplatte (40) abgewandten Seite vom Außenlager (21) reicht, zum Innendurchmesser (d) der Traghülse (10) liegt zwischen 0,8 und 1,5.
d) die Traghülse (10) weist auf den von der Befestigungsplatte (40) abgewandten Teil unmittelbar ans Außenlager (21) anschließend zur Durchführung von Abtriebsrädern (32) der Abtriebsstufen (31) des Getriebes (30) Aussparungen (13) auf und die Traghülse (10) ist über die Aussparung (13) hinaus bis zu einer Gesamtlänge (5) von mind. dem 1,5-fachen des Abstandes (L) fortgeführt.

2. Motorischer Antrieb nach Anspruch 1,
dadurch gekennzeichnet,
daß auf der Traghülse (10) die Außenhülse (20) mit zwei Kegelrollenlagern (21, 22) in "O"-Anordnung gelagert ist.

3. Motorischer Antrieb nach Anspruch 1,
dadurch gekennzeichnet,
daß die Traghülse (10) im Bereich des Traghülsenkopfes (12) nach der Aussparung (13) verjüngt ist.

4. Motorischer Antrieb nach einem der Ansprüche 1 - 3,
dadurch gekennzeichnet,
daß die Außenhülse (20) mit einem Stützlager (23) auf dem Traghülsenkopf (12) gelagert ist.

5. Motorischer Antrieb nach Anspruch 2,
dadurch gekennzeichnet,
daß die Außenhülse (20) an einem Ende eine Klemmnut (25) für ein Seil besitzt.

6. Motorischer Antrieb nach Anspruch 1,
dadurch gekennzeichnet,
daß an der Traghülse (10) im Bereich des Traghülsenkopfes (12) ein zusätzliches tragendes Element (14, 16) angeordnet ist.

7. Motorischer Antrieb nach Anspruch 6,
dadurch gekennzeichnet,
daß das tragende Element ein feststehender Seilführungsarm (14) ist, der senkrecht zur Traghülse (10) angeordnet ist.

8. Motorischer Antrieb nach Anspruch 7,
dadurch gekennzeichnet,
daß der Seilführungsarm (14) über eine Steckverzahnung (15) mit dem Traghülsenkopf (12) lösbar verbunden ist.

9. Motorischer Antrieb nach Anspruch 6,
dadurch gekennzeichnet,
daß das tragende Element eine drehbar angeordnete Zusatzhülse (16) ist.

## Claims

1. Motor drive with a multi-level gearing for an outer casing, in particular for a wheel or a drum, characterized as follows:
a) by an outer casing (20) which is bedded in supports (21, 22) on a support casing (10) disposed on an attachment plate (40),
b) by gearing (30) which is mainly disposed inside a support casing (10),
c) by a ratio between a separation (L), which extends from an attachment plate (40), parallel to a central axis (I) of gearing, to a side of an outer support (21) which faces away from a said attachment plate (40), and an internal diameter (d) of a support casing (10) which is between 0.8 and 1.5,
d) by a said support casing (10) which has openings (13) on a section facing away from a said attachment plate (40), directly adjoining a said outer support (21), for passage of drive wheels (32) of drive stages (31) of gearing (31), and a said support casing (10) continues to extend from above a said opening (13) over a length (S) which is at least 1.5 times as long as a said separation (L).

2. Motor drive in accordance with claim 1,
wherein
an external casing (20) is supported on a support casing (10), by two tapered-roller bearings (21. 22).

3. Motor drive in accordance with claim 1,
wherein
a support casing (10), after an opening (13), is tapered in an area of a head-section (12) of a said support casing (10).

4. Motor drive in accordance with any one of claims 1 to 3,
wherein
an outer casing (20) is bedded on a head-section (12) of a support casing, by a support bearing (23).

5. Motor drive in accordance with claim 2,
wherein
an outer casing (20) has a clamping recess (25), on one end, for a cable cord.

6. Motor drive in accordance with claim 1,
wherein
an additional support member (14, 16) is disposed on a support casing (10) in an area of a head-section (12) of a said support casing.

7. Motor drive in accordance with claim 6,
wherein
an additional support member is a fixed cord-guide arm (14) which is disposed vertically in relation to a support casing (10).

8. Motor drive in accordance with claim 7,
wherein
a cord-guide arm (14) is connected to a head-section (12) of a support casing by means of contact-toothing (15), and this such that a said cord-guide arm (14) can be released.

9. Motor drive in accordance with claim 6,
wherein
an additional support member is a supplementary casing (16) disposed such that it can rotate.

## Revendications

1. Entraînement motorisé comportant une transmission à plusieurs étages pour un manchon externe, en particulier pour une roue ou un tambour,
caractérisé par les particularités suivantes :
a) le manchon externe (20) est monté dans des paliers (21,22) sur un manchon de support (10) agencé sur une plaque de fixation (40),
b) la transmission (30) est agencée essentiellement à l'intérieur du manchon de support (10),
c) le rapport de la distance (L), qui s'étend de la plaque de fixation (40) parallèlement à l'axe central (I) de la transmission jusqu'au côté opposé à la plaque de fixation (40) du palier externe (21), au diamètre interne (d) du manchon de support (10) vaut entre 0,8 et 1,5,
d) le manchon de support (10) présente des évidements (13), sur la partie opposée à la plaque de fixation (40), se raccordant directement au palier externe (21), pour le passage de roues de sortie (32) des étages de sortie (31) de la transmission (30), et le manchon de support (10) se poursuit, au-delà de l'évidement (13), jusqu'à une longueur totale (S) égale à au moins 1,5 fois la distance (L).

2. Entraînement motorisé selon la revendication 1,
caractérisé en ce que, sur le manchon de support (10), le manchon externe (20) est monté en agencement annulaire par deux paliers à rouleaux coniques (21,22).

3. Entraînement motorisé selon la revendication 1,
caractérisé en ce que le manchon de support (10) est aminci dans la zone de la tête (12) du manchon de support après l'évidement (13).

4. Entraînement motorisé selon une des revendications 1 à 3,
caractérisé en ce que le manchon externe (20) est monté par un palier d'appui (23) sur la tête (12) du manchon de support.

5. Entraînement motorisé selon la revendication 2,
caractérisé en ce que le manchon externe (20) possède, à une extrémité, une gorge de serrage (25) pour un câble.

6. Entraînement motorisé selon la revendication 1,
caractérisé en ce que, sur le manchon de support (10), il est agencé, dans la zone de la tête (12) du manchon de support, un élément de support supplémentaire (14,16).

7. Entraînement motorisé selon la revendication 6,
caractérisé en ce que l'élément de support est un bras de guidage de câble fixe (14) qui est agencé perpendiculairement au manchon de support (10).

8. Entraînement motorisé selon la revendication 7,
caractérisé en ce que le bras de guidage de câble (14) est relié de façon amovible, par l'intermédiaire d'une denture (15), à la tête (12) du manchon de support.

9. Entraînement motorisé selon la revendication 6,
caractérisé en ce que l'élément de support est un manchon supplémentaire (16) agencé de façon rotative.
